# EUROPÄISCHE PATENTSCHRIFT

(11) **EP 2 084 453 B1**
(45) Veröffentlichungstag und Bekanntmachung des Hinweises auf die Patenterteilung: **27.07.2011**
(21) Anmeldenummer: 07818776.2
(22) Anmeldetag: 08.10.2007
(51) Int. Cl.: F21V 31/00

(54) **LEUCHTE**
LIGHT
DISPOSITIF D'ECLAIRAGE

(30) Priorität: 10.10.2006 DE 102006047874
(43) Veröffentlichungstag der Anmeldung: 05.08.2009
(73) Patentinhaber: IBV Holding GmbH, 49084 Osnabrück (DE)
(72) Erfinder: VONHOFF, Jürgen, 49076 Osnabrück (DE)
(74) Vertreter: Bünemann, Egon
(86) Internationale Anmeldenummer: PCT/EP2007/008701
(87) Internationale Veröffentlichungsnummer: WO 2008/043503

(56) Entgegenhaltungen:
- DE-A1- 10 333 980
- DE-U1- 9 316 979
- FR-A- 2 319 843
- FR-A- 2 411 692
- US-A- 5 225 125
- US-A- 5 934 799
- US-B1- 6 241 936

## Beschreibung

Die Erfindung betrifft eine Leuchte nach dem Oberbegriff des Anspruchs 1 sowie ein Verfahren nach dem Oberbegriff des Anspruchs 8, wie sie aus der deutschen Patentanmeldung DE 103 33 980 A1 bekannt sind. Leuchten dieser Art, die überwiegend in Großserienfertigungen als Massenprodukte erstellt werden und dementsprechend von der Fertigung und von dem Material her einem hohen Kostendruck unterliegen, lassen sich grundsätzlich im Spritzgußverfahren aus einem thermoplastischen Kunststoff, insbesondere auch aus einem Polypropylen, fertigen. Transparente oder zumindest durchscheinende Kunststoffe, wie sie für die Lichtabgabe von Gasentladungsröhren u. dgl. langgestreckten Lampen vorzugeben sind, bringen allerdings erhebliche Schwierigkeiten aufgrund hoher Wärmeausdehnungen mit sich, die den Paßsitz und Zusammenhalt der Gehäuseteile und insbesondere auch die dichte Verbindung zwischen beiden in Frage stellen.

Zur bestmöglichen Anpassung der Materialien von Oberteil und Unterteil einschl. der Angleichung der Wärmeausdehnungskoeffizienten ist bereits nach dem Stand der Technik vorgesehen worden, die beiden Gehäuseteile gleichzeitig aus einem gemeinsamen Spritzgußkolben oder dergleichen Spritzgußquelle in nebeneinanderliegende Kavitäten zu spritzen. Gleichwohl bedarf es noch besonderer Maßnahmen, die dichte Verbindung zwischen Unterteil und Oberteil unter allen Betriebsbedingungen und Temperaturbedingungen sicherzustellen. Solche Ausgestaltungen sind dann allerdings mit Rücksicht auf die Besonderheiten des Werkstoffs, im vorliegenden Fall eines spritzgußfähigen transparenten oder transluzenten thermoplastischen Kunststoffs, und die Möglichkeiten einer weitgehend automatisierten Großserienfertigung abzustimmen.

Gemäß der Erfindung wird dies von einer Leuchte nach dem Oberbegriff des Anspruchs 1 ausgehend mit den kennzeichnenden Merkmalen des Anspruchs 1 gelöst. Das Anbringen einer elastischen Dichtung praxisgerechter Form setzt insbesondere bei spritzwassergeschützten Leuchten einen verläßlichen Sitz voraus. Lose einlegbare Dichtungen, die bereits auf den Versandweg, jedenfalls aber beim Auswechseln einer Lampe oder bei sonstigen Wartungsarbeiten verrutschen oder herausfallen können, sind dementsprechend bedenklich. Thermoplastische Kunststoffe mit hinreichender Lichtdurchlässigkeit, wie sie hier vorausgesetzt werden, bieten jedoch aufgrund ihrer glatten Oberfläche ungünstige Hafteigenschaften für reibschlüssig oder klebend anhaftende Dichtungen. Dies gilt in ganz besonderem Maße für Polypropylen, welches ein für transparente Kunststoffe relativ preiswertes, im Spritzgußverfahren gut zu verarbeitendes Material darstellt, für die Dichtungsgestaltung aber nicht nur wegen seiner sehr hohen Wärmeausdehnung, sondern auch wegen seiner gegenüber Dichtungen glatten und abweisenden Oberfläche überaus heikel ist. Dem wird gemäß der Erfindung weiterhin dadurch abgeholfen, daß zumindest der für den Dichtungssitz vorgesehene Teil der Innenwand der U-förmigen Aufnahme eine haftungsverbessernde Oberflächenstruktur erhält, die diese als Dichtungssitz verwendbar macht. Diese Oberflächenstruktur kann etwa durch eine Plasmabehandlung der Innenfläche der Aufnahme oder wenigstens von Anlagebereichen Dichtung in einem auf den Spritzguß und die Entformung folgenden Arbeitsgang geschaffen werden. Andere Oberflächenstrukturen sind vorzugsweise bereits mit dem Spritzguß geschaffen, wenn etwa mit Profilierungen in der InnenOberfläche der Aufnahme Verankerungsmöglichkeiten für eine Dichtung, insbesondere in der Aufnahme geformte Dichtung, geschaffen werden.

Zur einfachen Gestaltung der Spritzwerkzeuge und zum problemlosen Entformen der Spitzgußteile können auf eine Ausstoßrichtung quergerichtete Profilierungen vorgesehen werden, die jedenfalls vergrößerte Haft- und Reibungsflächen schaffen. Quer zur Ausstoßrichtung verlaufende Profilierungen mit Hinterschneidung bezüglich des Ausstoßens sind vorzugsweise mit Hinterschneidungshöhen vorzugeben, die innerhalb der elastischen Verformbarkeiten der Aufnahme bleiben, damit das Entformen durch einfaches Ausstoßen aus der Form erfolgen kann.

Aus der FR 2 411 692 sind zwar Abdichtungen aus Polyurethan von Leuchten oder Schweinwerfern von Kraftfahrzeugen zu entnehmen, die in eine Nut eines (Metall-) Gehäuses oder einer (Glas-) Streuscheibe eingespritzt werden, bei den in Frage kommenden Materialien wie Metall und Glas fest anhaften und an einer nach außen vorspringendenOberfläche mit einer an der Luft sich bildenden Außenhaut zur dichtenden Anlage an dem anderen Fahrzeugteil vorgesehen sind. Bei den dort in Betracht gezogenen Materialien erzielt das Polyurethan von sich aus und ohne eine die Haftung verbessernde Oberflächenstruktur eine gute Klebeverbindung. Dies ist bei Polypropylen nicht gegeben. Weiterhin wäre aber dort die flach hervortretende Dichtung ohne besondere Maßnahmen zur Abdeckung und Verspannung der Dichtung durch die umgebenden Konstruktionen nicht spritzwassergeschützt auszuführen.

Die vorstehende Aufgabe wird gemäß der Erfindung weiterhin mit einem Verfahren nach dem Anspruch 11 gelöst.

Für die mit einer solchen Dichtung zu erzielenden Dichtwirkungen unter Berücksichtigung von thermischen Ausdehnungen und Spritzwasser-Einwirkungen ist auch die Querschnittsgeometrie von Einsteckteil und Dichtung für das Zusammenwirken von Bedeutung. Besonders vorteilhaft ist dabei ein Steckrand mit einer (einzigen) vorspringenden Stegkante vorzusehen, die unter Andruck gegen die Dichtung anliegt. Diese Einzel-Stegkante hat im Unterschied zu flächigen Anlagen oder mehrfachen, nebeneinander angeordneten Andruckkanten eine prägnante Verformung der Dichtung zur Folge, bei der letztere nicht flächig, sondern nur eng begrenzt eingedrückt wird. Überdies läßt eine solche Stegkante zumindest auf einer Seite noch die Möglichkeit zur Einrichtung eines überschüssigen Luftraums offen, der zumindest für eine ausreichende Zeit bei Spritzwasserbeanspruchung des Trennbereichs zwischen Ober- und Unterteil geeignet ist, Wasser abzufangen und aufzunehmen.

Ein Ausführungsbeispiel der Erfindung ist in der Zeichnung dargestellt und wird nachfolgend näher beschrieben. In der Zeichnung zeigen:
- Fig. 1: einen Querschnitt durch eine Leuchte und
- Fig. 2: vergrößertes Querschnittsdetail aus Fig. 1
- Fig. 3: vergrößertes Querschnittsdetail entsprechend Fig. 2 zu einer anderen Ausführungsform.

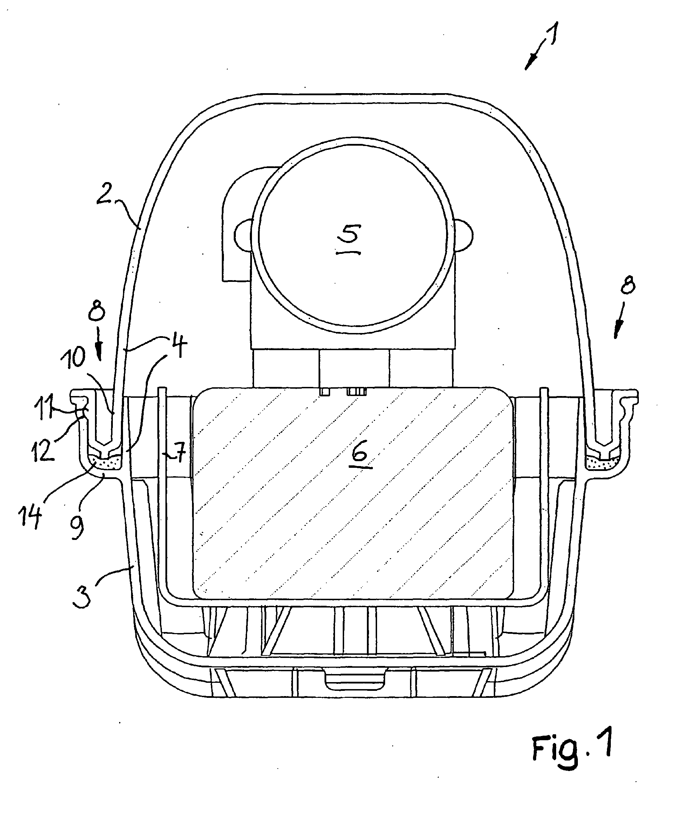

Eine Leuchte (1) mit dem Querschnitt gemäß Fig. 1 weist einen aus einem Kuppelteil (2) und einem Basisteil (3) zusammengesetztes, insgesamt mit 4 bezeichnetes Gehäuse lang gestreckter Form zur Aufnahme einer innen liegenden Gasentladungslampe (5) auf, wobei das Gehäuse (4) sich fast über seine gesamte Länger prismatisch erstreckt und an den Enden kappenförmig abgeschlossen ist. Das Basisteil (3) nimmt neben der Gasentladungslampe (5) auch die sonstige (elektrische) Einrichtung mit einem Vorschaltgerät (6) und einem zugehörigen Schirmblech (7) im Bereich des Vorschaltgeräts zur Minderung von Wärmestrahlung vom Vorschaltgerät auf Seitenwandungen des Basisteils (3) auf. Das Basisteil (3) kann zur festen Installation der Leuchte an einer Wand oder Decke befestigt werden, während das regelmäßig nicht mit Einrichtungsteilen der Leuchte versehene Kuppelteil (2) frei abnehmbar gestaltet ist.

Kuppelteil (2) und Basisteil (3) sind dabei über eine umlaufende Verrastung (8) lösbar miteinander zu verbinden, bei der auf einer Seite eine U-förmige Aufnahme (9) und auf der anderen Seite ein Einsteckteil (10) vorgesehen ist, welches in die U-förmige Aufnahme (9) einsteckbar ist. Im vorliegenden Fall bildet das Einsteckteil (10) den Rand des Kuppelteils (2), während das Aufnahmeteil (9) den Rand des Basisteils (3) bildet, wobei diese Zuordnung auch grundsätzlich umkehrbar wäre.

Einsteckteil (10) und Aufnahme (9) sind unter Vorspannung ineinandergepaßt, wobei Rastausformungen mit einer Rastnut (11) und einer Rastrippe (12) an der Aufnahme (9) bzw. dem Einsteckteil (10) mit einer quer zur Einsteckrichtung weisenden Profilierung einen festen Sitz gewährleisten. Eine Querschnittselastizität des Einsteckteils (10) ist zusätzlich durch eine Ausbildung als offenes Hohlprofil geschaffen, das rückwärtig zur Einsteckrichtung hin offen ist.

Wie insbesondere aus der vergrößerten Detaildarstellung der Verrastung (8) zu erkennen ist, weist das Einsteckteil (10) eine in Einsteckrichtung vorn liegende und vorspringende Stegkante (13) auf, die einheitlich mit dem gesamten Verrastungsprofil umlaufend vorgesehen ist. Diese Stegkante (13) greift mit einer vorgegebenen Eindrucktiefe auf eine Dichtung (14) auf, die in den untersten (innersten) Bereich der U-förmigen Aufnahmen (9) eingebracht ist.

Um einen präzisen und festen Sitz der Dichtung (14) auch bei Transporten, langer Lagerung und bei Wartungsarbeiten gewährleisten zu können, ist die Dichtung (14) nicht einfach auf eine mit der Spritzgußformung gebildete Innenwand (15) der U-förmigen Aufnahme (9) aufgebracht, vielmehr auf eine vorbehandelte Innenwand (15) mit einer Oberflächenstruktur, die erst mit einer Plasmabehandlung, insbesondere einer Niedertemperatur-Plasmabehandlung oder Kaltplasmabehandlung zu erhalten ist. Die Plasmabehandlung ist etwa mit Hilfe einer Korona- oder Hochfrequenzionisierung von Luft oder Gas zu erzielen und ermöglicht auf Oberflächen transparenter thermoplastischer Kunststoffe, insbesondere transparenten Polypropylens, erst ein gutes Haften eines Elastomers wie etwa eines Polyurethans, daß eine geschlossene aber auch glatte und damit schlecht haftende Außenhaut bildet.

Dieser Schritt ist von besonderer Bedeutung, um einen vorgegebenen festen Dichtungssitz zu schaffen und zu gewährleisten. Insbesondere bei Verwendung eines Polypropylens für ein transparentes oder transluzentes Gehäuse ist einerseits eine solche Plasmabehandlung Voraussetzung für die Einarbeitung einer in der Praxis ortsfesten Dichtung. Andererseits ist eine solche Dichtung (14) überaus wichtig, um den dichten Anschluß von Basisteil (3) und Kuppelteil (2) zu schaffen und zu erhalten.

Für die Effektivität der Dichtung (14) ist allerdings auch die Geometrie des Einsteckteils (10) von Bedeutung, bei der die Stegkante (13) in die Dichtung (14) eingreift. Eine einzelne Stegkante hat bei vorgegebenen Andruckkräften und Einwegtiefen eine besonders günstige Verformung der Dichtung (14) zufolge, die im Querschnitt einen engbegrenzten Dichtungsbereich definiert, der mit der vorzugebenden maximalen Anpressung den gewünschten Abschluß bietet.

Beiderseits der Stegkante (13) (oder bei seitlich versetzter Stegkante zumindest einerseits) sind Lufträume (16, 17) belassen, die insbesondere gegenüber sporadischen Spritzwasserbelastungen eine Absorptions- und Aufnahmewirkung zeigen, in dem sie eindringendes Wasser abfangen und eventuell scharf einstrahlendes Wasser abbremsen.

Im Ergebnis ist zu sehen, daß sich eine Leuchte aus einem transparenten formspritzbaren Material wie etwa Polypropylen in einer praxisgerechten und ggf. spritzwassergeschützen Ausführung erstellen läßt, wenn insbesondere im Dichtungsbereich Maßnahmen getroffen werden, die bei hoher thermischer Ausdehnung des Materials und bei einer für das Einbringen von Dichtungen von Haus aus ungünstigen glatten Oberflächen besondere Vorsorge getroffen wird.

Insbesondere bei der Fertigung eines Gehäuses (4) aus Polypropylen ist aber schon bei der Spitzgußformung darauf zu achten, daß jeweils ein Kuppelteil (2) und ein Basisteil (3) zwillingsartig in einen gemeinsamen Spritzgußvorgang nebeneinander liegend hergestellt werden. Nach dem Entformen kann die Innenfläche (15) der U-förmigen Aufnahme (9) in einem umlaufenden Behandlungsvorgang mit einer Plasmaelektrode zur Aufnahme einer nachfolgenden Dichtungsraupe aus einen geschlossenporigen Polyurethan vorbereitet werden.

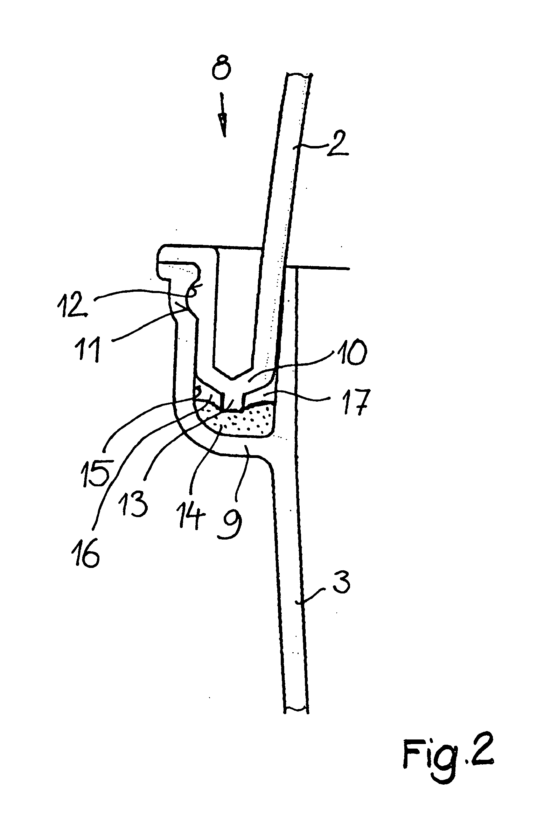

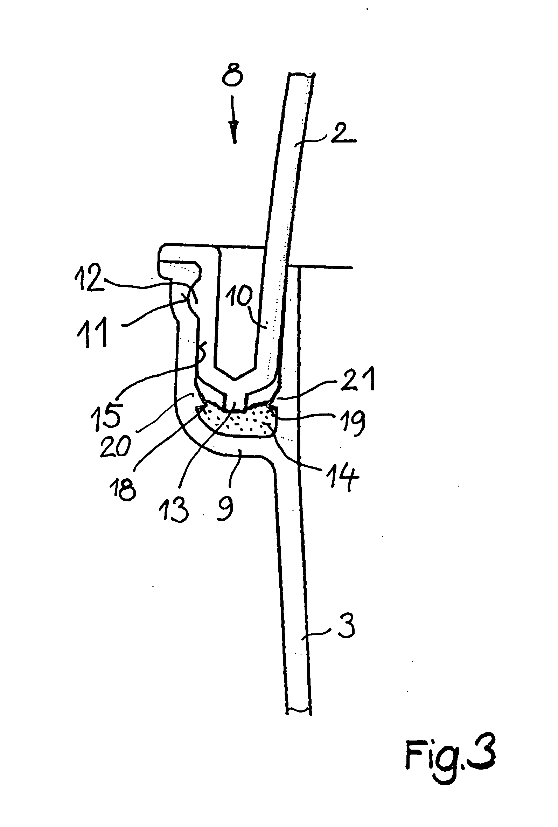

In Fig. 3 ist eine alternative Ausführungsform in einer der Fig. 2 entsprechenden Schnittansicht dargestellt, die mit der Ausführungsform gemäß Fig. 1 und 2 in vielen Einzelheiten übereinstimmt und dementsprechend auch insoweit mit den gleichen Bezugszeichen versehen ist. Auch dort weist die Verrastung 8 eine Aufnahme 9 und ein Einsteckteil 10 auf, wobei das Einsteckteil 10 auch wieder mit einer Stegkante 13 versehen ist, die auf eine Dichtung 14 in der Aufnahme 9 dichtend aufgreift. Die Ausführungsform gemäß Fig. 3 weicht von der vorbeschriebenen lediglich in zwei Hinterschneidungskanten 18, 19 und zugehörigen, im Querschnitt 3 eckförmigen Rippen 20, 21 ab, die insbesondere aus Darstellungsgründen relativ groß dargestellt sind. Die Hinterschneidungskanten weisen nach unten zum Boden der U-förmigen Aufnahme 9 hin und bieten der Dichtung 14 eine formschlüssige Verankerung in der Aufnahme, so daß die Dichtung 14 aus Polyurethan-Schaum mit einer offenen, weich-nachgiebigen Innenstruktur und einer geschlossenen, glatten Außenhaut innerhalb der Aufnahme 9 bei Transport und Montage und insbesondere auch bei späteren Wartungsarbeiten, wie Sie etwa zum Austauschen der Lampe oder Starterelemente vorkommen, in der vorgegebenen Position bleibt. Nicht nur das Herausfallen der Dichtung 14, sondern auch eine Verlagerung innerhalb der Aufnahme 9, die dann leicht zur Verletzung der geschlossenen Außenhaut und damit zum Verlust der Dichtungswirkung führen kann, wird dadurch unterbunden.

Die vorstehend betrachteten Hinterschneidungsflächen 18, 19 und die zugehörigen Rippen verlaufen in Richtung des Profils der Verrastung 8, das am Rand der Gehäuseteile 2, 3 umlaufend ausgebildet ist. Auch die Dichtung ist umlaufend vorgesehen mitsamt den sie festlegenden Hinterschneidungsflächen 18, 19. Im allgemeinen ist es zweckmäßig aber auch ausreichend, die Hinterschneidungsflächen in einer geringen Höhe auszubilden, so daß eine Entformung des die Aufnahme 9 aufweisenden Gehäuseteils, hier also des Basisteils 3, schnell und einfach durch Ausnutzung der elastischen Verformbarkeit der Aufnahme 9 beim Auswerfen möglich ist und nicht etwa dazu mehrteilige Werkzeuge vorzusehen sind.

Hinterschneidungsflächen und Rippen der hier betrachteten Art können natürlich mehrfach vorgesehen werden. Es kann auch schon eine einzelne Rippe zur einseitigen Verankerung der Dichtung ausreichen.

Oberflächenstrukturen mit anders gerichteten Profilierungen, etwa auch mit Profilierungen, die entsprechend der (Entformungs- und Einsteck-)Richtung verlaufen, sind grundsätzlich geeignet, die Festlegung der Dichtung 14 in der Aufnahme 9 zu verbessern, liefern dann allerdings nur eine erhöhte reibschlüssige Verankerung und nicht eine formschlüssige Verankerung wie die Hinterschneidungsflächen 18, 19.

## Patentansprüche

1. Leuchte (1) insbesondere spritzwassergeschützte Wand- oder Deckenleuchte, zur Aufnahme von zumindest einer langgestreckten Gasentladungslampe (5), mit einem aus einem ortsfest montierbaren und elektrische Einrichtungen haltenden zumindest durchscheinenden Basisteil (3) und einem zumindest durchscheinenden Kuppelteil (2) geschlossen zusammensetzbaren Gehäuse (4), bei dem das Basisteil (3) und das Kuppelteil (2) aus den gleichen Chargen thermopastischen Kunststoffs in einer gemeinsamen, im wesentlichen bezüglich des Einspritzvorgangs symmetrisch ausgelegten Form spritzgussgeformt sind und sich längs beiderseitig umlaufender Ränder überlappen, von denen ein Rand als Steckrand (10) und der andere Rand als U-förmige Aufnahme (9) für den Steckrand (10) ausgebildet ist, **dadurch gekennzeichnet, dass** der thermoplastische Kunststoff ein Polypropylen ist, dass die U-förmige Aufnahme (9) im innersten Bereich vor dem Steckrand (10) eine Dichtung (14) aus einem eine glatte Außenhaut bildenden Elastomer-Schaum enthält, auf die der Steckrand (10) mit vorgegebener Eindrucktiefe aufgreift und an der Innenwand (15) zur Aufnahme der Dichtung (14) mit einer die Haftung verbessernden Oberflächenstruktur versehen ist.

2. Leuchte nach Anspruch 1, **dadurch gekennzeichnet dass** der Elastomer-Schaum ein Polyurethan-Schaum ist.

3. Leuchte nach einem der Ansprüche 1 bis 2, **dadurch gekennzeichnet, dass** die Oberflächenstruktur in einer plasmabehandelten Oberfläche besteht.

4. Leuchte nach einem der Ansprüche 1 bis 3, **dadurch gekennzeichnet, dass** die Oberflächenstruktur eine Profilstruktur umfasst.

5. Leuchte nach Anspruch 4, **dadurch gekennzeichnet, dass** die Profilstruktur zumindest eine innerhalb der U-förmigen Aufnahme zurückspringende Hinterschneidungskante aufweist.

6. Leuchte nach Anspruch 5, **dadurch gekennzeichnet, dass** die Hinterschneidungskante eine beim Entformen mit der Elastizität der Aufnahme zu überwindende Höhe aufweist.

7. Leuchte nach einem der Ansprüche 1 bis 6, **dadurch gekennzeichnet, dass** der Steckrand (10) mit einer vorspringenden Stegkante (13) unter Andruck gegen die Dichtung (14) anliegt.

8. Leuchte nach Anspruch 7, **dadurch gekennzeichnet, dass** zumindest auf einer Seite der Stegkante (13) zwischen Steckrand (10) und Dichtung (14) ein überschüssiger Luftraum (16, 17) als Puffer gegenüber Spritzwasser freibehalten ist.

9. Leuchte nach einem der Ansprüche 1 bis 8, **dadurch gekennzeichnet, dass** Steckrand (10) und Aufnahme (9) mit ineinandergreifenden komplementären Rastprofilen (11, 12) versehen sind.

10. Leuchte nach Anspruch 9, **dadurch gekennzeichnet dass** der Steckrand (10) im Querschnitt mit einem bezüglich der Einsteckrichtung rückseitig offenen Hohlprofil ausgestattet ist.

11. Verfahren zur Herstellung einer Leuchte nach einem der Ansprüche 1 bis 10, bei dem das Oberteil und das Unterteil in parallelen Kavitäten einer Spritzgussanlage gleichzeitig von einen gemeinsamen Spritzgusskolben aus geformt und nach dem Erstarren entformt werden, **dadurch gekennzeichnet, dass** als thermoplastischer Kunststoff ein Polypropylen verwendet wird und daß die U-förmige Aufnahme innenseitig durch eine Plasmabehandlung mit einer Plasmabehandlung haftfähig für eine Dichtung aus einem eine glatte Außenhaut bildenden geschlossenporigen Polyurethan-Schaum ausgebildet und dann im innersten, vor dem Steckrand liegenden Bereich mit einer Dichtungsraupe aus Polyurethan belegt wird.

## Claims

1. Luminaire (1), and in particular a wall or ceiling luminaire which is protected against sprayed water, to receive at least one elongated gas-discharge lamp (5), having a housing (4) able to be assembled in a closed form from an at least translucent base part (3) which can be mounted in a fixed position and which holds electrical gear and from an at least translucent coupling part (2), in which housing (4) the base part (3) and the coupling part (2) are injection moulded from the same batches of thermoplastic plastics material in a common mould which is of substantially symmetrical design as far as the injection process is concerned, and overlap along edges which extend round in a loop in both cases, of which edges one takes the form of an insertable edge (10) and the other takes the form of a U-shaped receptacle (9) for the insertable edge (10), **characterised in that** the thermoplastic plastics material is a polypropylene and **in that** the U-shaped receptacle (9) contains, in its innermost region and in front of the insertable edge (10), a seal (14) of an elastomer foam which forms a smooth outer skin, on which seal (10) the insertable edge (10) takes a grip by impressing it to a preset depth, and, to receive the seal (14), the U-shaped receptacle (9) is provided on the inner wall (15) with a surface structure which improves adhesion.

2. Luminaire according to claim 1, **characterised in that** the elastomer foam is a polyurethane foam.

3. Luminaire according to one of claims 1 to 2, **characterised in that** the surface structure comprises a plasma-treated surface.

4. Luminaire according to one of claims 1 to 3, **characterised in that** the surface structure comprises a profiled structure.

5. Luminaire according to claim 4, **characterised in that** the profiled structure has at least one undercut edge which forms a recess within the U-shaped receptacle.

6. Luminaire according to claim 5, **characterised in that** the undercut edge is of a height which has to be dealt with by virtue of the elasticity of the receptacle at the time of demoulding.

7. Luminaire according to one of claims 1 to 6, **characterised in that** the insertable edge (10) rests against the seal (14), while applying pressure, by a projecting ridged edge (13).

8. Luminaire according to claim 7, **characterised in that**, on at least one side of the ridged edge (13), an extra air-space (16, 17) is left free between the insertable edge (10) and the seal (14) as a buffer against sprayed water.

9. Luminaire according to one of claims 1 to 8, **characterised in that** the insertable edge (10) and the receptacle (9) are provided with interengaging complementary latching profiles (11, 12).

10. Luminaire according to claim 9, **characterised in that**, in cross-section, the insertable edge (10) is provided with a hollow profile which is open to the rear in the direction of insertion.

11. Method of producing a luminaire according to one of claims 1 to 10, in which the upper part and the lower part are moulded simultaneously by a common injection moulding piston in parallel cavities in an injection moulding system and are demoulded after solidifying, **characterised in that** a polypropylene is used as a thermoplastic plastics material and **in that**, on the inside, the U-shaped receptacle is formed by a plasma treatment with a plasma treatment to be adherent to a seal of a closed-pored polyurethane foam which forms a smooth outer skin, and is then covered in its innermost region situated in front of the insertable edge with a sealing bead of polyurethane.

## Revendications

1. Dispositif d'éclairage (1), en particulier applique murale ou plafonnier étanche au jet d'eau, pour la réception d'au moins une lampe à décharge étirée en longueur (5), avec un boîtier (4) fermé pouvant être composé d'une partie de base (3) au moins transparente, maintenant des dispositifs électriques et pouvant être montée fixement et d'une partie de coupole (2) au moins transparente, pour lequel la partie de base (3) et la partie de coupole (2) sont formées par moulage par injection dans les mêmes bains de thermoplastiques dans un moule commun, prévu sensiblement symétrique par rapport au processus d'injection et se recouvrent le long des bords tournants des deux côtés, dont un bord est réalisé comme un bord enfichable (10) et l'autre bord comme un logement en U (9) pour le bord enfichable (10), **caractérisé en ce que** le thermoplastique est un polypropylène, **en ce que** le logement en U (9) contient, dans la zone intérieure devant le bord enfichable (10), une garniture (14) en une mousse d'élastomère formant une peau extérieure lisse, sur laquelle le bord enfichable (10) s'engage avec une profondeur d'empreinte prescrite, et est pourvu d'une structure de surface améliorant l'adhérence sur la paroi intérieure (15) pour la réception de la garniture (14).

2. Dispositif d'éclairage selon la revendication 1, **caractérisé en ce que** la mousse d'élastomère est une mousse de polyuréthane.

3. Dispositif d'éclairage selon l'une quelconque des revendications 1 à 2, **caractérisé en ce que** la structure de surface consiste en une surface traitée au plasma.

4. Dispositif d'éclairage selon l'une quelconque des revendications 1 à 3, **caractérisé en ce que** la structure de surface comporte une structure profilée.

5. Dispositif d'éclairage selon la revendication 4, **caractérisé en ce que** la structure profilée présente au moins une arête de contre-dépouille en retrait dans le logement en forme de U.

6. Dispositif d'éclairage selon la revendication 5, **caractérisé en ce que** l'arête de contre-dépouille présente une hauteur à surmonter lors du démoulage avec l'élasticité du logement.

7. Dispositif d'éclairage selon l'une quelconque des revendications 1 à 6, **caractérisé en ce que** le bord enfichable (10) repose par pressage par une arête de dos (13) en saillie contre la garniture (14).

8. Dispositif d'éclairage selon la revendication 7, **caractérisé en ce qu'**un vide d'air (16, 17) excédentaire est maintenu libre pour servir de tampon par rapport au jet d'eau au moins sur un côté de l'arête de dos (13) entre le bord enfichable (10) et la garniture (14).

9. Dispositif d'éclairage selon l'une quelconque des revendications 1 à 8, **caractérisé en ce que** le bord enfichable (10) et le logement (9) sont pourvus de profilés d'encliquetage (11, 12) complémentaires s'engrenant.

10. Dispositif d'éclairage selon la revendication 9, **caractérisé en ce que** le bord enfichable (10) est équipé en section transversale d'un profilé creux ouvert côté arrière par rapport au sens d'enfichage.

11. Procédé de fabrication d'un dispositif d'éclairage selon l'une quelconque des revendications 1 à 10, pour lequel la partie supérieure et la partie inférieure sont moulées dans des cavités parallèles d'une installation de moulage par injection en même temps à partir d'un piston de moulage par injection commun et sont démoulées après solidification, **caractérisé en ce qu'**un propylène est utilisé comme thermoplastique et **en ce que** le logement en U est réalisé côté intérieur par un traitement au plasma de manière à présenter une adhésivité pour une garniture en une mousse de polyuréthane à pores fermés formant une peau extérieure lisse et est garni d'un cordon de garniture en polyuréthane dans la zone intérieure se trouvant devant le bord enfichable.
